# EUROPÄISCHE PATENTANMELDUNG

(11) **EP 1 898 242 A2**
(43) Veröffentlichungstag der Anmeldung: **12.03.2008**
(21) Anmeldenummer: 07115866.1
(22) Anmeldetag: 06.09.2007
(51) Int. Cl.: G02B 7/04, G03B 3/02

(54) **Schärfenzieheinrichtung für das Objektiv einer Film- oder Videokamera**

(30) Priorität: 07.09.2006 DE 202006013864 U
(71) Anmelder: Denz, Peter, 81673 München (DE)
(72) Erfinder: Denz, Peter, 81673 München (DE)
(74) Vertreter: Borchert, Uwe Rudolf

(57) **Zusammenfassung**

Die Erfindung betrifft eine Schärfenzieheinrichtung für das Objektiv einer Film- oder Videokamera mit einem auf einer support-geführten schlittenförmigen Basis angeordneten einen Skalenring aufweisenden Bedienknopf, dem eine auf das Objektiv einwirkende Stellvorrichtung zugeordnet ist. Die Erfindung zeichnet sich dadurch aus, dass zwecks Einschwenken des Einstellkopfes (11) in das Gesichtsfeld des Schärfeassistenten in extremen Positionen der Filmkamera der Bedienknopf (11) um eine etwa parallel zur optischen Achse (23) des Objektivs (O) aber im Abstand davon liegende mit der Antriebswelle (Schneckenrad 31) der Stellvorrichtung (15) fluchtende Achse (25) in Bezug auf das Objektiv (O) schwenkbar sowie in der eingenommenen Schwenkstellung arretierbar gelagert ist.

## Beschreibung

Die Erfindung betrifft eine Schärfenzieheinrichtung für das Objektiv einer Film- oder Videokamera mit einem auf einer support-geführten schlittenförmigen Basis angeordneten, einen Skalenring aufweisenden Bedienknopf, dem eine auf das Objektiv einwirkende Stellvorrichtung zugeordnet ist.

Solche Schärfenzieheinrichtungen sind bekannt. Da bei einer optischen Abbildung oft eine größere Unschärfe zulässig ist als sie sich durch die Fehlerrate des abbildenden Systems ergibt, wird dieser Überschuss an Unschärfe benutzt, um nicht nur die exakt scharf eingestellte Dingebene, sondern auch einen vor oder hinter ihr liegenden Tiefenraum befriedigend abzubilden. Dies gilt insbesondere für Filmbilder, wo eine höhere Unschärfe - Sehwinkel größer als 3 Winkelminuten - zulässig ist. Auf diese Weise wird den durch die Filmkamera aufgenommenen Bildern die gewünschte Raumwirkung verliehen.

Da sich in einer aufzunehmenden Szene die theoretische Dingebene ständig verschiebt, muss daher bei Filmaufnahmen die Schärfentiefe des Aufnahmeobjektivs der Video- oder Filmkamera durch einen so genannten Schärfeassistenten ständig neu eingestellt werden. Hierdurch wird der die Kamera führende Operator entlastet, der die Kamera entsprechend den Weisungen des Kameramannes zu führen hat.

Wie sich aus dem vorstehenden ergibt, ist zur Erzielung optimaler optischer Eindrücke von Filmaufnahmen notwendig, die Film- oder Videokamera entsprechend der jeweils aufzunehmenden Szene nahe, fern, von oben, von unten und mit wechselnden Abständen an die Akteure zu führen, was ein ständiges Einstellen der Schärfentiefe erfordert. Dies erfolgt mittels des genannten einen Skalenring tragenden Bedienknopfes der Schärfenzieheinrichtung. In Folge der notwendigen Bewegungen der Kamera, die ein Gewicht von 25 Kilogramm und mehr aufweist kommt der der Kamera zugeordnete Bedienknopf in Positionen, die dem Schärfeassistenten sowohl hinsichtlich der Ablesung des Skalenringes als auch der Betätigung des Bedienknopfes selbst Schwierigkeiten bereiten. Auf dem Skalenring macht der Schärfeassistent vor Beginn der Aufnahmen mit einem löschbaren Stift Markierungen, wo er während der Aufnahmen mit der Schärfe hinfahren muss. Darüber hinaus wird in den Extremlagen der aufnehmenden Filmkamera eine so genannte biegsame Welle benutzt, die an einem Ende ein mit dem Bedienknopf der Kamera zu verbindendes Kupplungsstück (Vierkant) und an ihrem anderen Ende ebenfalls einen Bedienknopf aufweist, die im eingesetzten Zustand in den genannten Extremlagen der Kamera leicht abknickt und dadurch ein Nachstellen der Schärfentiefe unmöglich macht.

Hier mit einfachen Mitteln Abhilfe zu schaffen, ist Aufgabe der Erfindung.

Ausgehend von dem bekannten, der Film- oder Videokamera fest zugeordneten Bedienknopf ist diese Aufgabe gemäß der Erfindung dadurch gelöst, dass der Bedienknopf um eine etwa parallel zur optischen Achse des Objektivs, aber im Abstand davon liegende, mit der Antriebswelle der Stellvorrichtung fluchtende Achse in Bezug auf das Objektiv der Filmkamera schwenkbar sowie in der eingenommenen Schwenkstellung arretierbar gelagert ist.

Durch diese verblüffend einfache erfinderische Maßnahme kann der Bedienknopf je nach Aufnahmeposition der Film- oder Videokamera gegenüber einer gedachten Waagerechten jeweils um maximal +/- 45° verschwenkt, also in das Gesichtsfeld des Schärfeassistenten geschwenkt werden, was Ablesung und Einstellung insbesondere in Extremlagen der Kamera wesentlich erleichtert. Ein weiterer Vorteil ist darin zu sehen, dass bei Benutzung der genannten biegsamen Welle in den genannten Extremlagen der Kamera ein Abknicken dieser biegsamen Welle vermieden wird, was oft das Nachziehen der Schärfe unmöglich macht.

Vorzugsweise sind Bedienknopf und Stellvorrichtung eine mit dem Objektiv in Wirkverbindung bringbare Baugruppe, die mit der im Querschnitt etwa L-förmig ausgebildeten Basis über ein am kurzen Schenkel der Basis befindliches Lagerauge einstellbar verbunden ist.

Vorzugsweise ist dem Lagerauge der Basis eine Rastscheibe zugeordnet, die in Wirkverbindung mit einer korrespondierenden Rastscheibe bringbar ist, welche der Stirnseite des die Stellvorrichtung antreibenden Stellgliedes zur Einstellung des Schärfeeinstellringes des Objektivs zugeordnet und von der Schwenkachse des Bedienknopfes mittig durchdrungen ist.

Weitere Merkmale der Erfindung ergeben sich aus den Unteransprüchen.

Die Erfindung ist nachfolgend anhand einer in der Zeichnung mehr oder minder schematisch dargestellten, auf das Objektiv einer Filmkamera einwirkenden Schärfenzieheinrichtung beschrieben.

Es zeigen:
- Fig. 1: Eine perspektivische Ansicht einer mit dem Objektiv einer Filmkamera in Wirkverbindung stehenden Schärfezieheinrichtung gemäß der Erfindung;
- Fig. 2: die Schärfenzieheinrichtung nach Fig. 1 von vorn gesehen
- Fig. 3: einen Schnitt gemäß der Linie III - III in Fig. 2 und
- Fig. 4: in vergrößertem Maßstab eine im Schnitt dargestellte Einzeleinheit der Schärfenzieheinrichtung nach Fig. 1.

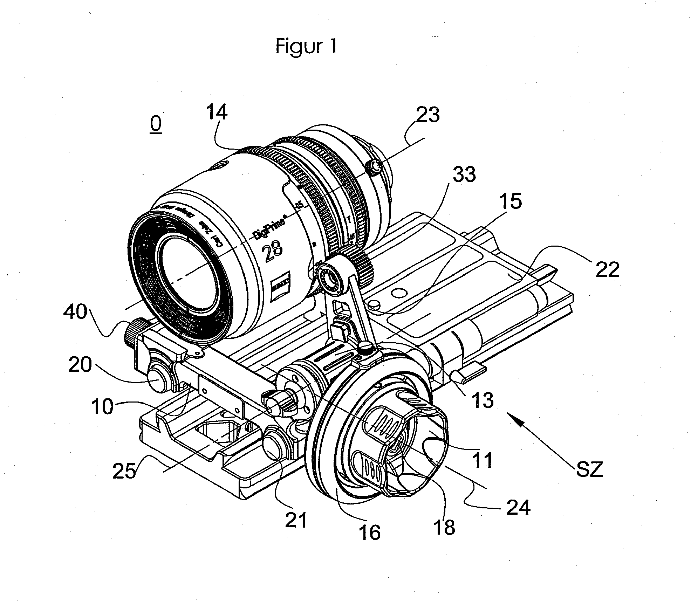

Eine in Fig. 1 perspektivisch dargestellte Schärfenzieheinrichtung SZ umfasst mehrere Baugruppen, nämlich eine Basis 10, ein von einem Stellknopf 11 betätigbares Winkelgetriebe 12 in einem Gehäuse 13 und eine mit einem Einstellring 14 eines Objektives O einer hier nicht dargestellten Film- oder Videokamera in Eingriff bringbare Stellvorrichtung 15. Dem Stellknopf 11 ist ein einstellbarer Skalenring 16 zugeordnet; ferner ist dem Einstellknopf 11 in seinem Zentrum eine Kupplungsöffnung 18 zur Aufnahme des Kupplungsstückes einer hier nicht dargestellten biegsamen Welle zugeordnet.

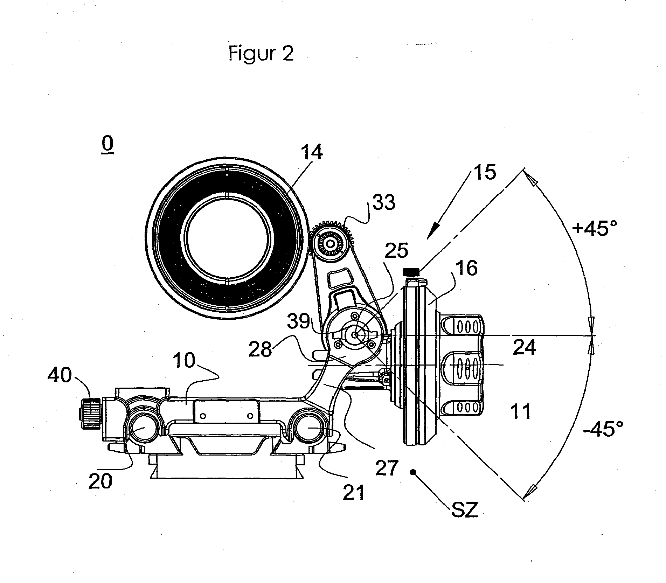

Die im Querschnitt etwa L-förmige stegförmige Basis 10 umgreift an ihrer Unterseite zwei parallel zueinander angeordnete Rohre 20, 21 (support rods), längs denen sowohl die Basis 10 als auch die nicht dargestellte Filmkamera, die von einer Stützplatte 22 getragen ist, verschieblich gelagert sind. Die optische Achse des Objektivs 0 ist mit 23, die rechtwinklig dazu angeordnete Drehachse des Einstellknopfes 11 ist mit 24 und die Schwenkachse, um die der Einstellknopf 11 schwenkbar ist, ist mit 25 bezeichnet; vgl. Figuren 2, 3 und 4.

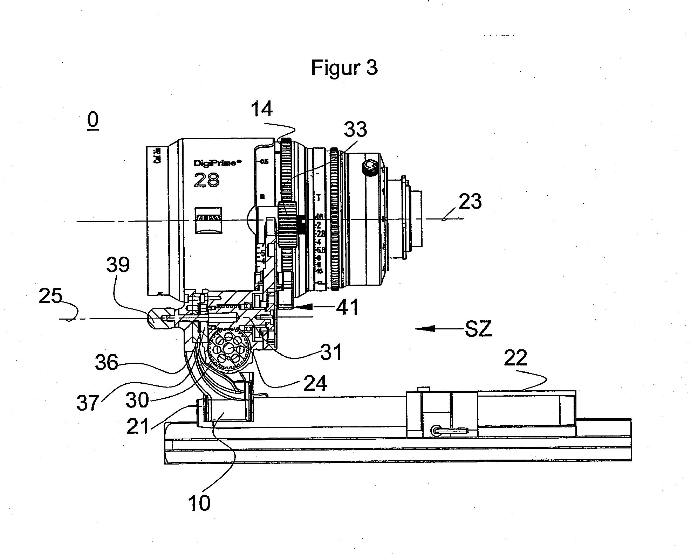

Die Basis 10 weist an ihrem mit dem langen Schenkel einen Winkel von mehr als 90° einschließenden kurzen Schenkel 27 (vgl. Fig. 2) ein Lagerauge 28 auf, das als tragende Aufnahme für das das Winkelgetriebe 12 umfassende Gehäuse 13 dient, an dessen freiem Ende die Stellvorrichtung 15 angeflanscht ist; vgl. Fig. 3. Dem Einstellknopf 11 ist ein Zahnrad 30 zugeordnet, das mit einem Schneckenrad 31 - oder Kegelrad - kämmt; beide bilden das genannte Winkelgetriebe 12, das von dem Gehäuse 13 umfasst ist. Der einen Stirnseite des Schneckenrades 31 ist der Antrieb der Stellvorrichtung 15 zugeordnet, die einen von einem schematisch dargestellten Riementrieb 32 angetriebenes Ritzel 33 umfasst, das mit dem Einstellring 14 des Objektivs O in Eingriff bringbar ist. In die abgewandte Stirnseite des Schneckenrades 31 greift eine gestufte Achse 35 ein, die zwei gleichachsig angeordnete, einander zugewandte Rastscheiben 36 und 37 trägt, von denen die Rastscheibe 37 sich an der Abstufung der Achse 35 anlegt. Die andere Rastscheibe 36 ist mit dem Gehäuse 13 fest verbunden, so dass mittels einer Feststellschraube 39, die auf die Rastscheibe 37 einwirkt, die jeweilige Einstellage der Schärfenzieheinrichtung feststellbar ist. Damit wird die Schwenklage des Einstellknopfes 11 um die Achse 25 als auch die über den Einstellknopf und das Winkelgetriebe sowie die Stellvorrichtung eingestellte Schärfentiefe des Objektivs O fixiert. Wie nämlich Fig. 2 zeigt, kann der Einstellknopf 11 +/- 45° um die Achse 25, die die gestufte Achse 35 des Winkelgetriebes mittig durchsetzt, gegenüber der in Fig. 2 dargestellten waagerechten Normallage verschwenkt werden.

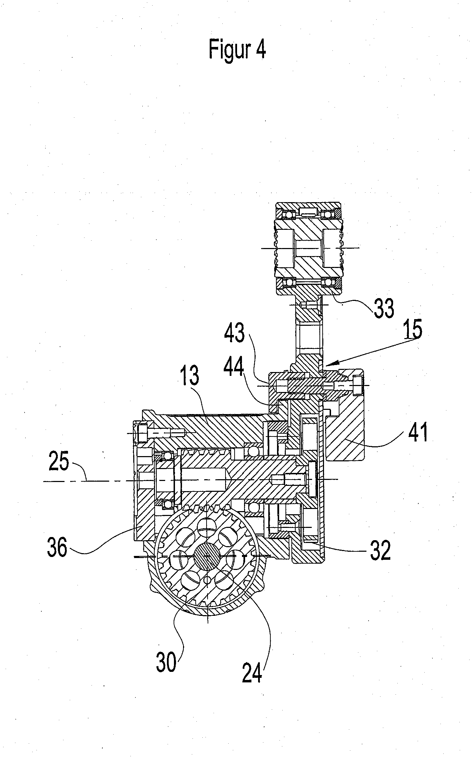

Die Schwenklage der am Gehäuse 13 schwenkbar gelagerten Stellvorrichtung 15 kann nach deren Ineingriffbringen mit dem Einstellring 14 mittels einer Spannklaue 41 gegenüber dem Gehäuse 13 fixiert werden, die mit einem Spannglied 43 zusammenzieht, das sich beim Spannen gegen eine Flanschfläche 44 des Gehäuses 13 legt; vgl. Fig. 4.

Die Einstellage der Basis 10 ist mittels einer Feststellschraube 40 ebenfalls fixierbar.

Wie sich aus der vorstehenden Beschreibung der neuen Schärfenzieheinrichtung ergibt, wird erstmals ermöglicht, dass auch in extremen Positionen der Filmkamera der Einstellknopf mit seinem Skalenring in das Gesichtsfeld des Schärfeassistenten schwenkbar und in der gewählten Position arretierbar ist, so dass die notwendigen Schärfeeinstellungen einfacher als bisher durchführbar sind.

### BEZUGSZEICHENLISTE

- 10: Basis
- 11: Stellknopf
- 12: Winkelgetriebe
- 13: Gehäuse
- 14: Einstellring
- 15: Stellvorrichtung
- 16: Skalenring
- 18: Kupplungsöffnung
- 20: Rohr
- 21: Rohr
- 22: Stützplatte
- 23: Optische Objektivachse
- 24: Drehachse des Einstellknopfes
- 25: Schwenkachse des Einstellknopfes
- 27: Kurzer Schenkel
- 28: Lagerauge
- 30: Zahnrad
- 31: Schneckenrad mit gestufter Welle
- 32: Riementrieb
- 33: Ritzel
- 36: Rastscheibe
- 37: Rastscheibe
- 39: Feststellschraube
- 40: Feststellschraube
- 41: Spannklaue
- 43: Spannglied
- 44: Flanschfläche

- 0: Objektiv
- SZ: Baugruppe

## Patentansprüche

1. Schärfenzieheinrichtung für das Objektiv einer Film- oder Videokamera mit einem auf einer support-geführten schlittenförmigen Basis angeordneten einen Skalenring aufweisenden Bedienknopf, dem eine auf das Objektiv einwirkende Stellvorrichtung zugeordnet ist, **dadurch gekennzeichnet, dass** der Bedienknopf (11) um eine etwa parallel zur optischen Achse (23) des Objektivs (0) aber im Abstand davon liegende mit der Antriebswelle (35) der Stellvorrichtung (15) fluchtende Achse (25) in Bezug auf das Objektiv (0) schwenkbar sowie in der eingenommenen Schwenkstellung arretierbar gelagert ist.

2. Schärfenzieheinrichtung nach Anspruch 1, **dadurch gekennzeichnet, dass** der Bedienknopf (11) und die Stellvorrichtung (15) eine mit dem Objektiv (0) in Wirkverbindung bringbare Baugruppe (SZ) bilden, die mit der im Querschnitt etwa L-förmig ausgebildeten Basis (10) über ein am kurzen Schenkel (27) der Basis befindliches Lagerauge (28) verbunden ist.

3. Schärfenzieheinrichtung nach den Ansprüchen 1 und 2, **dadurch gekennzeichnet, dass** dem Lagerauge (28) der Basis (10) eine Rastscheibe (36) zugeordnet ist, die in Wirkverbindung mit einer korrespondierenden Rastscheibe (37) bringbar ist, welche der Stirnseite des die Stellvorrichtung (16) antreibenden Schneckenrades (31) zur Einstellung des Schärfeeinstellringes (14) des Objektivs (0) zugeordnet und von der Schwenkachse (25) des Bedienknopfes (11) mittig durchdrungen sowie in der jeweiligen Einstellage feststellbar ist.

4. Schärfenzieheinrichtung nach den Ansprüchen 1 bis 3, **dadurch gekennzeichnet, dass** das als Welle für den Stellantrieb ausgebildete über den Bedienknopf angetriebene Schneckenrad (31) an der den Rastscheiben (36, 37) zugeordneten Seite eine Lagerbohrung zur Aufnahme der im Durchmesser gestuften Schwenkachse (35) des Bedienknopfes (11) aufweist, deren Stufung als axial feste Anlagefläche für die eine (37) der Rastscheiben (36, 37) dient.

5. Schärfenzieheinrichtung nach den Ansprüchen 1 bis 4, **dadurch gekennzeichnet, dass** dem Festlegen der jeweiligen Einstellagen der Baugruppe (SZ) eine an der freien Stirnseite der Schwenkachse (35) befindliche Feststellschraube (39) dient.

6. Schärfenzieheinrichtung nach den Ansprüchen 1 bis 5, **dadurch gekennzeichnet, dass** das als Welle (25) dienende Schneckenrad (31) an seinem abgewandten Ende mit einem Riementrieb (32) der Stellvorrichtung (15) für den über ein Ritzel (33) erfolgenden Antrieb des am Objektiv (O) befindlichen Einstellringes (14) für das Schärfeziehen verbunden ist.

7. Schärfenzieheinrichtung nach den Ansprüchen 1 bis 6, **dadurch gekennzeichnet, dass** die Einstelllage der Stellvorrichtung (15) mittels einer Spannklaue (41) feststellbar ist.

8. Schärfenzieheinrichtung nach den Ansprüchen 1 bis 7, **dadurch gekennzeichnet, dass** der Schwenkwinkel des Einstellknopfes (11) maximal +/- 45° beträgt.

9. Schärfenzieheinrichtung nach Anspruch 1, **dadurch gekennzeichnet, dass** der Bedienknopf (11) in seinem Zentrum eine einen Formschluss mit dem ein Kupplungsstück tragenden Ende einer biegsamen Welle ermöglichende Öffnung (18) aufweist.

10. Schärfenzieheinrichtung nach Anspruch 1, **dadurch gekennzeichnet, dass** die Achse (25), um die der Einstellknopf (11) schwenkbar gelagert ist, von dem Schneckenrad (31) des die Antriebsbewegung des Einstellknopfes (11) auf das Ritzel (33) übertragenden Winkelgetriebes (12) gebildet ist.
